**Europäisches Patentamt**

**European Patent Office**

**Office européen des brevets**

(11) Numéro de publication : **0 459 868 A1**

# (12) DEMANDE DE BREVET EUROPEEN

(21) Numéro de dépôt : **91401313.1**

(22) Date de dépôt : **22.05.91**

(51) Int. Cl.⁵ : **C02F 1/44,** B01D 61/14, // C02F1/64

(30) Priorité : 30.05.90 FR 9006697

(43) Date de publication de la demande : 04.12.91 Bulletin 91/49

(84) Etats contractants désignés : AT BE CH DE DK ES FR GB IT LI LU NL SE

(71) Demandeur : **LYONNAISE DES EAUX - DUMEZ S.A.**
**52 rue de Lisbonne**
**F-75008 Paris (FR)**

(72) Inventeur : **Bersillon, Jean-Luc**
**51 rue des Courcieux**
**F-78570 Andresy (FR)**

(74) Mandataire : **Coumarie, Michèle et al**
**Office Blétry 2, boulevard de Strasbourg**
**F-75010 Paris (FR)**

(54) Procédé d'élimination de métaux dissous dans de l'eau.

(57) Procédé d'élimination de métaux dissous dans de l'eau, par oxydation du métal en une forme insoluble, précipitation et séparation de la forme insoluble, caractérisé en ce que la séparation de la forme insoluble est effectuée par filtration sur membrane et en ce qu'on recycle à l'étape d'oxydation au moins une partie de l'eau non filtrée par la membrane.

EP 0 459 868 A1

L'invention concerne un procédé d'élimination de métaux dissous dans de l'eau, par oxydation en une forme insoluble, précipitation et séparation de la forme insoluble.

Au cours du traitement de l'eau en vue de sa distribution, il est parfois nécessaire d'éliminer les métaux dissous pour satisfaire aux normes de potabilité ou éviter une précipitation spontanée dans l'eau distribuée. On procède alors à une déferrisation ou une démanganisation pour ne citer que les exemples les plus courants.

Dans de tels procédés, en particulier la déferrisation, l'eau est mise en contact avec un oxydant pour oxyder le fer ferreux en fer ferrique puis on sépare le précipité d'hydroxyde ferrique hydraté qui se forme. Cette séparation se fait par filtration, essentiellement lorsque l'eau contient relativement peu de fer (de l'ordre de 5 mg/l) et pas d'autres produits indésirables à éliminer, ou par décantation lorsque l'eau est chargée en fer (10 mg/l ou plus) ou en autres matières précipitables.

Dans les deux cas c'est la vitesse d'oxydation de $Fe^{++}$ en $Fe^{+++}$ qui est déterminante pour la cinétique globale de la réaction. Or on a tout intérêt à ce que la réaction soit rapide pour limiter les temps de séjour dans les ouvrages et donc leur taille et leur coût.

On sait que la présence de $Fe^{+++}$ catalyse la réaction d'oxydation du fer ferreux et on a tenté de mettre à profit ce phénomène dans la mise en oeuvre du procédé, en particulier pour des eaux contenant jusqu'à 5 mg/l de fer. L'oxydation est alors effectuée par aération dans une tour de contact garnie d'un matériau poreux (par exemple une lave volcanique) qui d'une part divise l'eau pour assurer un meilleur contact avec l'air et d'autre part retient une partie du fer ferrique formé. Mais la mise en service d'une telle unité implique un laps de temps pendant lequel la formation et donc la rétention de fer ferrique est longue et aléatoire.

On ne peut pas par ailleurs envisager de recycler même partiellement l'hydroxyde ferrique hydraté séparé par décantation sous forme de boues car il colmaterait rapidement le matériau poreux de la tour d'aération. Un tel recyclage est encore moins envisageable lorsque les eaux sont fortement chargées en fer et autres matières précipitables.

Il serait donc intéressant de pouvoir réaliser un apport contrôlé de fer ferrique dans la tour ou l'ouvrage d'aération sans les inconvénients mentionnés précédemment.

Or il a été constaté de manière surprenante que si l'on recyclait à l'ouvrage d'aération le rejet (eau non filtrée) d'une membrane de filtration placée après l'ouvrage d'aération et éventuellement l'ouvrage de décantation, la quasi-totalité du fer précipitait sous une forme séparable par membrane en un temps très court.

L'invention fournit donc un procédé d'élimination de métaux dissous dans de l'eau, par oxydation du métal en une forme insoluble, précipitation et séparation de la forme insoluble, caractérisé en ce que la séparation de la forme insoluble est effectuée par filtration sur membrane et en ce qu'on recycle à l'étape d'oxydation au moins une partie de l'eau non filtrée par la membrane et contenant le métal sous forme insoluble.

L'utilisation d'une membrane de filtration, ayant un pouvoir de coupure de quelques dixièmes de µm (par exemple 0,20 µm), permet de se libérer des contraintes de formation d'un précipité séparable par décantation ou filtration classique.

Certes le rejet de la membrane contient du fer ferrique à l'état d'hydroxyde ferrique en suspension, mais les fines particules qui sont entraînées forment un dépôt catalytique sur le matériau poreux de la tour d'aération et ne l'engorgent pas comme le feraient des boues d'hydroxyde ferrique hydraté obtenues par décantation.

Dans le cas où les eaux à traiter sont fortement chargées en fer ou en autres matières précipitables, la membrane de filtration peut être précédée d'un ouvrage de décantation dans lequel le temps de séjour est inférieur au temps nécessaire à la formation totale de la forme décantable de l'hydroxyde ferrique. L'hydroxyde ferrique sous forme non décantable est alors arrêté par la membrane et recyclé à l'ouvrage d'aération. L'ouvrage de décantation permet de débarrasser les eaux d'une partie des matières précipitées en évitant le colmatage rapide de la membrane de filtration.

Dans le cas de l'élimination du manganèse, l'oxydation par simple aération ne suffit pas. Elle est alors effectuée par addition d'un oxydant sous forme liquide (eau de chlore, eau ozonée,...) dans un ouvrage comportant un garnissage permettant la rétention de la forme oxydée servant de catalyseur.

L'avantage du recyclage d'une eau contenant toute la forme oxydée (du fer, du manganèse ou autre) produite - en l'absence d'ouvrage de décantation - ou une quantité non négligeable de celle-ci - car un ouvrage de décantation n'est utilisé qu'en cas de fortes teneurs en métal à précipiter - est que l'on aboutit à chaque fois à la présence de catalyseur en quantité suffisante pour que l'oxydation du métal à éliminer se fasse totalement en un temps très court.

Ceci permet de réduire les temps de séjour dans l'ouvrage d'oxydation, de supprimer dans certains cas l'ouvrage de décantation (s'il y a peu de matières precipitables autres que le métal) et de diminuer de façon importante la taille des installations et donc leur coût.

L'invention sera illustrée par un exemple de réalisation nullement limitatif.

Exemple de mise en oeuvre d'une boucle de recyclage pour la déferrisation/démanganisation.

Une eau contenant 3 mg/l de fer dissous ($Fe^{++}$) et 0,5 mg/l de manganese dissous ($Mn^{++}$) a été traitée dans une installation constituée d'une tour d'aération suivie d'une bâche de contact à niveau variable, puis d'une boucle d'ultrafiltration à purge intermittente recyclée à la tour d'aération. Ce traitement a été comparé à un traitement conventionnel dans une tour d'aération suivie d'un décanteur puis d'un filtre à sable.

Le recyclage de l'hydroxyde ferrique précipité a permis de réduire le temps de contact de 2 heures tel qu'il était dans le décanteur à 10 minutes dans la bâche de contact de l'installation d'ultrafiltration. On a pu remarquer qu'il existait une fuite de fer dissous à la sortie de la bâche de contact (de l'ordre de 0,3 mg/l), fuite qui était complètement arrêtée par la boucle d'ultrafiltration. Dans ce processus, le manganèse n'était pas oxydé.

Une seconde campagne d'essai a consisté à compléter l'oxydation à l'air par ajoût d'eau de Javel diluée, en quantité variable pour oxyder le manganèse. Il a été constaté qu'il y avait oxydation complète de cet élément pour des doses de cet oxydant complémentaire correspondant à 1/3-1/2 de la dose stoechiométrique nécessaire pour passer de $Mn^{++}$ dissous à $MnO_2$ précipité. Ceci a été attribué à la formation de complexes insolubles dans la boucle de filtration recyclés à l'étape d'oxydation.

## Revendications

1.- Procédé d'élimination de métaux dissous dans de l'eau, par oxydation du métal en une forme insoluble, précipitation et séparation de la forme insoluble, caractérisé en ce que la séparation de la forme insoluble est effectuée par filtration sur membrane et en ce qu'on recycle à l'étape d'oxydation au moins une partie de l'eau non filtrée par la membrane.

2.- Procédé selon la revendication 1, caractérisé en ce que l'oxydation se fait par aération dans une tour d'aération garnie d'un matériau poreux.

3.- Procédé selon la revendication 1, caractérisé en ce que l'oxydation se fait par addition d'un oxydant à l'état liquide.

Office européen
des brevets

**RAPPORT DE RECHERCHE EUROPEENNE**

Numero de la demande

EP 91 40 1313

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | WPI / DERWENT, accession no. 80-50613C [29], Derwent Publications Ltd, London, GB; & JP-A-55 73 390 (KURARAY K.K.), & PATENT ABSTRACTS OF JAPAN, vol. 4, no. 13 (C-21)[595], 13 août 1980 * Abrégés * | 1 | C 02 F 1/44 B 01 D 61/14 // C 02 F 1/64 |
| A | CHEMICAL ABSTRACTS, vol 78, no. 22, 4 juin 1973, page 253, abrégé no. 140045d, Columbus, Ohio, US; K. YOSHIDA et al.: "Iron removal by membrane filtration", & NIPPON JOZO KYOKAI ZASSHI 1972, 67(10), 888-90 * Abrégé * | 1,3 | |
| A | CHEMICAL ABSTRACTS, vol. 110, no. 24, 12 juin 1989, page 390, abrégé no. 218750f, Columbus, Ohio, US; & CN-A-87 106 661 (HUBEI INSTITUTE OF INDUSTRIAL BUILDING DESIGN) 06-04-1988; & WPIL, accession no. 89-151178 [21], Derwent Publications Ltd, London, GB * Abrégé * | 1 | |
| A | PATENT ABSTRACTS OF JAPAN, vol. 13, no. 269 (P-888), 21 juin 1989; & JP-A-1 61 697 (HITACHI LTD), & WPIL, accession no. 89-117395, Derwent Publications Ltd, London, GB * Abrégés * | 1,3 | **DOMAINES TECHNIQUES RECHERCHES (Int. Cl.5)** C 02 F B 01 D |
| A | WPI / DERWENT, accession no. 76-40870X [22], Derwent Publications Ltd, London, GB; & JP-A-51 43 848 (TORAY) * Abrégé *   -/- | 1 | |

Le présent rapport a été établi pour toutes les revendications

| Lieu de la recherche | Date d'achèvement de la recherche | Examinateur |
|---|---|---|
| LA HAYE | 15-07-1991 | HOORNAERT P.G.R.J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P0402)

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | EP-A-0 131 119 (NEPTUNE MICROFLOC) * Abrégé; revend.; figure 1; page 17, lignes 9-19 * | 1 | |
| A | CHEMICAL ABSTRACTS, vol. 109, no. 2, 11 juillet 1988, page 318, abrégé no. 11477f, Columbus, Ohio, US; W.B. BEDWELL et al.: "Crossflow microfiltration-fouling mechanisms studies", & SEP. SCI. TECHNOL., 1988, 23(6-7), 345-62 * Abrégé * | 1 | |
| A | DE-B-1 642 479 (F. KRUPP) * Document en entier * | 1-3 | |
| P,X | PROCEEDINGS 5TH WORLD FILTRATION CONGRESS, Nice, juin 1990, vol. 1, pages 29-35; A. TAZI PAIN et al.: "Iron removal in groundwater by crossflow micro and ultrafiltration" * Document en entier * | 1,2 | |
| E | EP-A-0 433 200 (GIE ANJOU-RECHERCHE)(19-06-1991) * Abrégé; figures 3-6; revendications 1,9; page 5, ligne 51 - page 6, ligne 10; exemple 1 * | 1,2 | |

DOMAINES TECHNIQUES
RECHERCHES (Int. Cl.5)

Le présent rapport a été établi pour toutes les revendications

| Lieu de la recherche | Date d'achèvement de la recherche | Examinateur |
|---|---|---|
| LA HAYE | 15-07-1991 | HOORNAERT P.G.R.J. |

EPO FORM 1503 03.82 (P0403)